# EUROPEAN PATENT APPLICATION

(11) **EP 2 312 287 A1**
(43) Date of publication of application: **20.04.2011**
(21) Application number: 10186403.1
(22) Date of filing: 04.10.2010
(51) Int. Cl.: G01J 5/06, G01J 5/08

(54) **Infra-red imager**

(30) Priority: 07.10.2009 US 249320 P
(71) Applicant: Semi-Conductor Devices - An Elbit Systems - Rafael Partnership, 31021 Haifa (IL)
(72) Inventor: Oster, Dov, 9770 Reut Modiin (IL); Singer, Michael, 25147 Kfar Vradim (IL); Koifman, Alina, 27223 Qiryat Bialik (IL); Markovitz, Tuvy, 2514 Kfar Vradim (IL)
(74) Representative: Becker Kurig Straus

(57) **Abstract**

An infrared (IR) imaging system (200) is presented. The system comprises a cooling chamber (114) associated with a cooler generating a certain temperature condition inside the chamber. The cooling chamber has an optical window (116), and comprises thereinside an IR detector (112) and a cold shield (118) both thermally coupled to said cooler, and an imaging optical assembly (130) comprising one or more imaging lenses defining a certain fixed focus of the imaging assembly and being enclosed by the cold shield in between the detector and the optical window. The imaging optical assembly and the detector are therefore under the same cooling temperature thereby reducing thermal noise in the detected image.

## Description

### FIELD OF THE INVENTION

The invention is generally in the field of imaging techniques and relates to an Infra-Red (IR) imager.

### BACKGROUND OF THE INVENTION

Typically, the conventional IR detectors are of a type requiring cooling of the light detection element (detecting IR radiation). The conventional IR detectors, for example Focal Plane Array (FPA) detectors, are usually cooled to a cryogenic temperature and are typically associated with (e.g. enclosed within) cryogenically cooled Dewar. The latter includes a cold shield and a cold filter of the Dewar, and has a Dewar enclosure including a warm optical window as a part thereof. The detector is placed in a housing and is located behind the cold shield and cold filter. The cooling mechanism (which typically cools also the cold shield and the cold filter) supports the increase of the signal-to-noise ratio of the IR radiation detection by reducing a thermal noise (in the IR spectral range), namely noise associated with thermal emission from the detector housing which is disposed to environment. The cold shield is typically configured for reducing the thermal noise from the detected signal by minimizing the IR radiation that arrives to the detector from regions out of the field of view of the complete system.

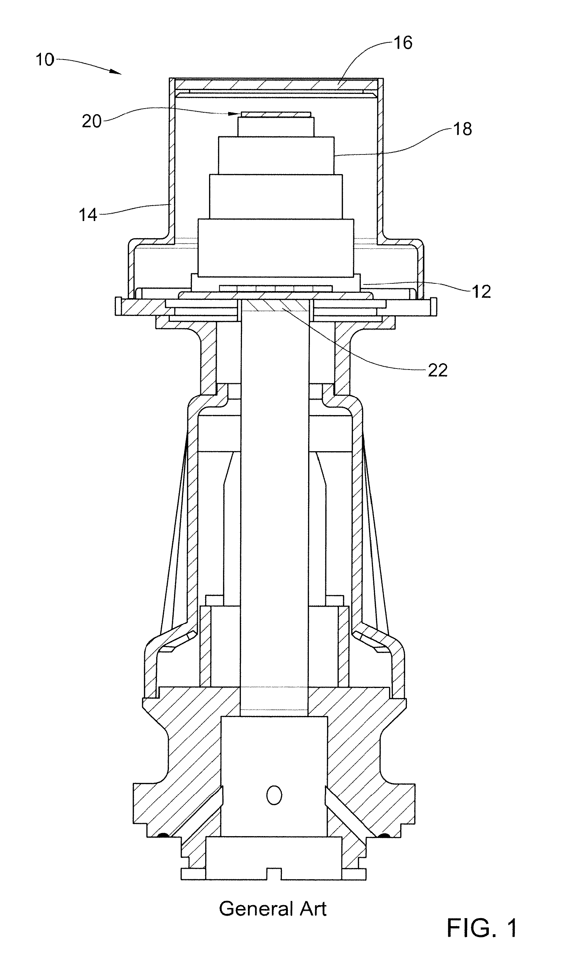

Such cooled IR detectors typically utilize an IR radiation-sensitive detection module (e.g. FPA detector), a cold shield and a cold filter. **Fig. 1** exemplifies a conventional detector Dewar assembly **10.** As shown, the assembly **10** includes a light sensitive element (detector) **12,** enclosed inside a Dewar (housing) **14.** The housing **14** has an optical window **16,** collecting IR radiation to be sensed by detector **12.** The optical window **16** is thus a part of the Dewar enclosure. The housing **14** with the window is exposed to environment, the optical window is thus called "warm window". The housing contains a cold shield **18** surrounding the detector element **12** and being thermally isolated from inner surface of the enclosure **14** by vacuum and by a low emissivity coating of the outer surface of the shield **18.** The cold shield carries a cold filter **20.** The detector element **12** is coupled to an internal cryogenic cooler **22.**

Various techniques have been developed for reducing the thermal noise in IR detection systems. For example, US 4,820,923 describes an uncooled reflective shield for cryogenically cooled radiation detectors. Here, a warm shield reflector is used with a cryogenically cooled radiation detector. The warm shield has a reflective surface of toroidal shape. The surface has geometric properties which cause a ray emanating from the detector to be reflected such that a ray is imaged as a defocused ring outside of and surrounding the active detector area. Several such segments are located in front of a small, cryogenically cooled detector shield, to provide an overall detector shielding effect similar to that of a larger, cryogenically cooled shield.

US 6,969,840 discloses an all-reflective telescope which has, in order, a positive-optical-power primary mirror, a negative-optical-power secondary mirror, a positive-optical-power tertiary mirror, a negative-optical-power quaternary mirror, and a positive-optical-power field lens. The mirrors and lens are axisymmetric about a beam axis. The light beam is incident upon an infrared detector after reflecting from the quaternary mirror. A cooling housing encloses the detector and the field lens, but does not enclose any of the mirrors. An uncooled warm-stop structure outside of the cooling housing but in a field of view of the detector is formed as a plurality of facets with reflective surfaces oriented to reflect a view of an interior of the cooling housing back to the interior of the cooling housing.

US 7,180,067 discloses an infrared imaging system using an uncooled elliptical surface section between reflective surfaces to allow a detector to perceive a cold interior of a vacuum chamber rather than a warmer surface of a structure or housing. In this way, background infrared radiation from within the system may be minimized.

### GENERAL DESCRIPTION

There is a need in the art for a novel IR imager (or imaging system) the configuration of which enables to eliminate or at least significantly reduce thermal noise originated in the entire imager. This is associated with the following.

Any imager has a detector element (module) which should be used with an imaging optics. According to the conventional approach in the field of IR imaging, the imaging optics is always located outside a detection module. This is because the detection module is incorporated within a cooling chamber and because imaging optics is typically of relatively high thermal mass (e.g. typically includes focus control and adjustment, as well as aberration compensation mechanisms, etc.). More specifically, the imaging optics includes one or more imaging lenses and/or mirrors, as well as a focus correction system permitting the system to remain in focus at a range of ambient temperatures, and such imaging optics is associated with mechanical assemblies and various electronics.

Thus, with the conventional approach, an IR imaging system suffers from thermal noise reducing the system performance. This thermal noise is associated with the following. On the one hand, uncooled imaging optics, located outside a cooler, is highly sensitive to temperature changes, namely the refractive index of imaging optics in the IR spectral range is highly dependent on the temperature conditions of the imaging optics. A change in the refractive index unavoidably introduce optical aberrations and focus change which require focal correction, which in turn needs the use of focus control and focus adjustment mechanisms. On the other hand, imaging optics (e.g. lenses and mechanical components), as any other object, emit thermal energy (black body radiation), which presents a noise component in the detected light thus reducing the signal to noise of the system. Some thermal noise effects associated with temperature changes in the imaging optics might be compensated by utilizing the so-called non-uniformity correction (NUC) procedure for calibration and correction of the readout signal collected from the FPA (IR) detector. However, during the use of the NUC procedure for calibration of the IR imaging system, the system is put in an inoperative state (during which the system is "blind"). It is, therefore, preferable to minimize the amount of NUC procedures that are required during the operation of the system.

The invention provides a novel IR imaging system configured for relatively far field imaging, for example, imaging with a certain focus fixed at infinity and/or any other fixed distance, which when used integral with the detector dewar assembly (cooling chamber) does not need any focus correction and adjustment mechanism. Utilizing cryogenically cooled imaging optics and temperature stabilized imaging optics practically eliminates the need of focus correction and also significantly reduces the need for NUC. This increases the system robustness to ambient temperature changes and minimizes the number of NUC procedures that are needed during the operation of the system. Additionally, stabilizing the temperature of the imaging optics significantly reduces the thermal radiation emitted from the imaging optics.

Thus, the invention enables a complete IR imaging system incorporated within a (cryogenically) cooled detector Dewar assembly. One or more imaging lenses of the imaging assembly is/are mounted inside the cooling chamber, e.g. inside a cold shield or otherwise inside the dewar vacuum space, with none or a negligible impact on the size, weight and heat load (thermal mass) of the resulting imaging system.

According to one broad aspect of the invention, there is provided an infrared (IR) imaging system comprising: a cooling chamber associated with a cooler generating a certain temperature condition inside the chamber, said cooling chamber having an optical window, and comprising thereinside: an IR detector and a cold shield both thermally coupled to said cooler, and an imaging optical assembly enclosed by said cold shield in between the detector and the optical window. The imaging optical assembly comprises one or more imaging lenses defining a certain fixed focus of the imaging optical assembly. Hence, according to the invention, the imaging optical assembly and the detector are maintained under substantially the same cooling temperature thereby reducing thermal noise in the detected image.

It should be noted that in the context of the present invention the words "light" and "IR radiation" are used interchangeably.

The cooling chamber comprises a cold filter. The latter may for example be part of the imaging optical assembly. For example, the imaging optical assembly may include a plurality of optical elements (including said at least one imaging lens), which are spaced from one another. For example, the optical elements can be mounted in a spaced-apart relationship in the cold shield or spaced from each other by segments of the cold shield. The cold filter may be implemented as a coating on the at least one lens of the imaging optical assembly, or may be a separate element.

The cooling chamber incorporating the detector and imaging optics, together with the cold filter and cold shield, may be very light, e.g. of about a few grams in weight.

According to another aspect of the invention, there is provided an imaging method comprising collecting light with a certain fixed field of view and imaging the collected light onto an imaging detector by imaging optics of a certain fixed focus, said imaging optics comprising one or more imaging lenses located inside a cooling chamber between the imaging detector and an optical window through which IR radiation is collected, thereby maintaining the imaging optics under the same cooled conditions as the imaging detector thus reducing thermal noise in the detected image.

It should be understood that the optical lens assembly becomes effective at stabilized low temperature, as set by the cooling requirements of the detector (for example at 100K). This prevents the need for frequent focus and NUC, which may be required in order to compensate for the ambient temperature variations. The low temperature of the mechano-optical assembly thus significantly reduces its thermal emission, which usually contributes to spurious signal. The latter has an adverse effect on both dynamic range and spatial uniformity of the IR detector.

According to some embodiments of the invention, the imaging assembly may be mounted inside the cold shield or otherwise within the cooling chamber (dewar), and is preferably kept at a stabilized temperature, for example 100K for cryogenically cooled IR detectors. Such imaging assembly typically includes 2 to 4 lenses and a cold filter, and has a weigh of only a few grams, e.g. about 5 grams.

The present invention is particularly useful, but not limited to, for both wide-angle, single field-of-view (FOV) imaging, such as typically used in situational awareness, IR search&track, environmental monitoring, as well as missile and gun-shot warning systems.

Thus, the invented approach provides for designing a complete IR imaging system in which the imaging optics is enclosed inside or integral with the cold shield. This is specifically useful for a cryogenically cooled IR imaging system. The cooling chamber with the integrated imaging optics can be of a practically the same size, weight and heat load as an equivalent, standard non-imaging detector Dewar assembly.

The overall imaging system can thus be significantly smaller and lighter than that utilizing a pupil-imaging external optical assembly having equivalent performance. As indicated above, the integrated optics operates at stabilized low temperature (~100k), thereby eliminating a need to adjust the system focus to compensate for temperature deviations. The cooled optics emits less spurious signal upon the IR imaging detector (e.g. FPA), thus improving the dynamic range and the residual non-uniformity noise of the detector. Due to the much smaller size and typically a fewer number of the optical elements, the cost of the integrated optics can be substantially lower that that of the conventional pupil-imaging IR optics.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a schematic view of a conventional IR detector Dewar assembly; and
**Figs. 2A** **and** **2B** **s**how two examples of the IR imaging system according to the invention.

### DETAILED DESCRIPTION OF EMBODIMENTS

**Fig. 1** illustrates the IR detector Dewar assembly **10** configured according to the conventional approach. This detector assembly **10** is enclosed in a cryogenic cooling system, and for imaging applications is used with an external imaging optics. As described above, such an imaging system formed by the conventional detector assembly with external imaging optics would suffer from thermal noise and reduced performance.

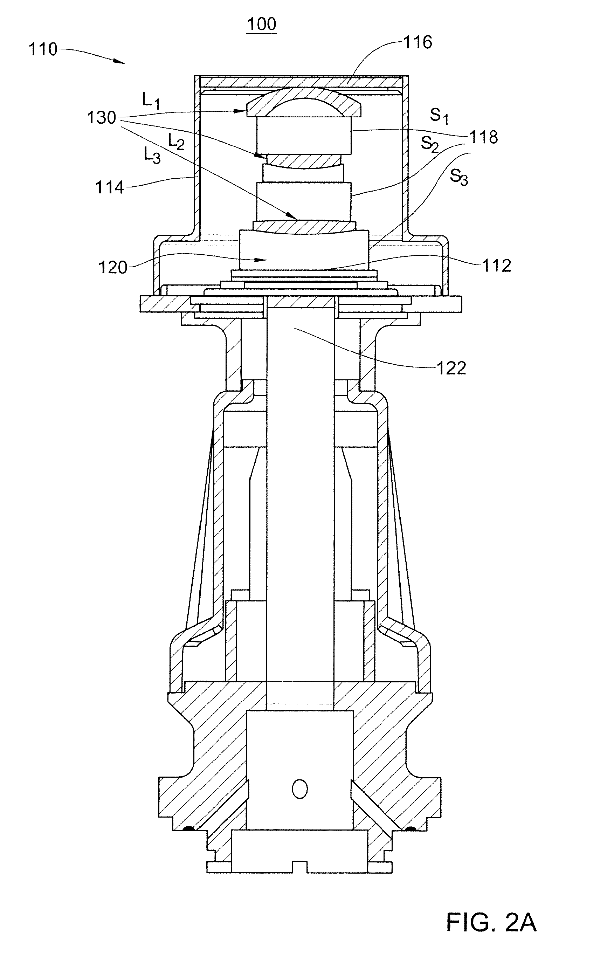

Reference is made to **Fig. 2A** illustrating an example of an IR imaging system, generally designated **100,** constructed and operable according to the invention. The system **100** is configured as an integrated system formed by a detector Dewar assembly **110** and an imaging optical assembly **130.** The imaging system **100** includes a cooling chamber **114** associated with a cooler **122.** Located inside the cooling chamber **114** are the detector Dewar assembly **110** and the imaging assembly **130,** thus forming cryogenically cooled integrated detector Dewar assembly and imaging optics. The imaging assembly **130** is formed by one or more imaging optical elements and has a certain fixed focus per the system application. For example, this may be "far field" imaging, e.g. focused on infinity. The imaging assembly may be designed for a desired F-number and field of view.

More specifically, the detector Dewar assembly **110** has cooling chamber **114** formed with an optical window **116** ("warm window") and incorporating an imaging detector **112** coupled to a cryogenic cooler **122.** A cold filter **120** is located inside the housing **114** adjacent to the imaging detector **112** so as to be in the optical path of light collected through the optical window and propagating towards the detector **112.** Also mounted inside the housing (chamber) **114** is a cold shield **118** (located in between the optical window and the cold filter) and carrying the imaging assembly **130** in a manner providing thermal coupling between the cold shield and the elements of the imaging optical system **130.** The imaging assembly **130** includes a certain number of imaging lenses, three imaging lenses **L₁, L₂** and **L₃** in the present example, arranged in a spaced-apart relationship being spaced from one another by segments **S₁** and **S₂** of the cold shield **118.** The lens **L₃** is spaced from the imaging detector **112** by the cold filter **120.** The cold filter is a spectral filter, and may be placed at any location in the optical path of the collected light, being implemented either as a separate element or as a coating (thin film) on the lens (es). Thus, the imaging optical system is actually integral or enclosed within the cold shield **118.**

It should be understood that, according to the invention, all the elements of the imaging optical system are located under temperature conditions of the cryogenically cooled media inside the detector Dewar assembly **110.** Accordingly, the optical path defined by the imaging assembly is kept under the desired cooling conditions, e.g. at cryogenic or desired fixed temperature. As a result, the thermal noise associated with thermal emission of the optical elements along the optical path is practically eliminated, and also a need to compensate for thermal aberrations, associated with the temperature dependence of the optical properties of the optical elements (e.g. refractive index), is eliminated. These properties of the imaging system of the present invention configured to operate with the fixed focus allows for making the system lighter and smaller. Indeed, the cooled system (detector and imaging optics together with cold shield and cold filter) may be configured to have a very low thermal mass and accordingly being of a very low weight (only about 5 grams) to enable reduction of the required rate of heat pumping need to maintain the system under desired temperature. Also, the system may have very small overall dimensions, close to those of a standard equivalent-performance detector Dewar assembly with no integral optics.

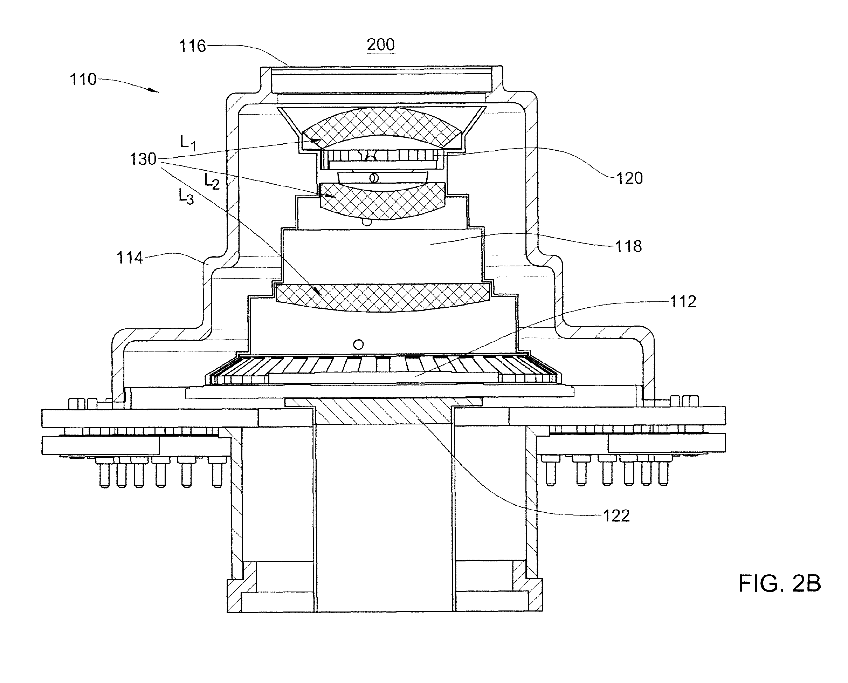

Reference is made to **Fig. 2B** showing another specific but not limiting example of the imaging system **200** of the invention. The system **200** is generally similar to the above described system **100,** namely includes a cooling chamber **114** incorporating the detector Dewar assembly **110** and the imaging assembly **130.** In the system **200,** the imaging assembly **130** includes a cold filter **120** located in between lenses **L₁** and **L₂.** Also here, the optical elements of the imaging assembly are enclosed within the cold shield **118,** while in the above described system **100,** these elements are integral with the segments of the cold shield.

## Claims

1. An infrared (IR) imaging system comprising: a cooling chamber associated with a cooler generating a certain temperature condition inside the chamber, said cooling chamber having an optical window, and comprising thereinside: an IR detector and a cold shield both thermally coupled to said cooler, and an imaging optical assembly enclosed by said cold shield in between the detector and the optical window made, said imaging optical assembly comprising one or more imaging lenses defining a certain fixed focus of the imaging assembly, the imaging optical assembly and the detector being therefore under the same cooling temperature thereby reducing thermal noise in the detected image.

2. An IR imaging system of claim 1, wherein the imaging optical assembly is enclosed inside or integral with the cold shield.

3. An IR imaging system of claim 2, wherein the imaging assembly is mounted inside the cold shield.

4. An IR imaging system of any one of claims 1 to 3, having a weight of a few grams.

5. An IR imaging system of any one of claims 1 to 4, wherein said cooling chamber comprises a cold filter.

6. An IR imaging system of any one of claims 1 to 4, wherein the imaging optical assembly comprises a cold filter.

7. An IR imaging system of any one of claims 1 to 6, wherein the imaging optical assembly comprises a plurality of optical elements including said at least one imaging lens, the optical elements being spaced from one another by segments of the cold shield.

8. An IR imaging system of any one of claims 1 to 6, wherein said one or more imaging lenses of the imaging optical assembly is enclosed within the cold shield.

9. An IR imaging system of claim any one of claims 1 to 6, wherein the imaging optical assembly comprises a plurality of optical elements including said at least one imaging lens, the optical elements being mounted in a spaced-apart relationship in the cold shield.

10. An IR imaging system of any one of claims 6 to 9, wherein the cold filter is a coating on the at least one lens of the imaging optical assembly.

11. An infrared (IR) imaging method comprising collecting IR radiation with a certain fixed field of view and imaging the collected radiation onto an IR imaging detector by imaging optics of a certain fixed focus, said imaging optics comprising one or more imaging lenses located inside a cooling chamber between the IR imaging detector and an optical window through which light is collected, thereby maintaining the imaging optics under the same cooled conditions as the imaging detector thus reducing thermal noise in the detected image.
